Europäisches Patentamt

European Patent Office

Office européen des brevets

(11) Veröffentlichungsnummer: **0 289 803**

**A2**

(12) # EUROPÄISCHE PATENTANMELDUNG

(21) Anmeldenummer: **88105617.0**

(22) Anmeldetag: **08.04.88**

(51) Int. Cl.⁴: **G01C 21/12**

(30) Priorität: **06.05.87 DE 3715007**

(43) Veröffentlichungstag der Anmeldung:
**09.11.88 Patentblatt 88/45**

(84) Benannte Vertragsstaaten:
**DE FR GB SE**

(71) Anmelder: **ROBERT BOSCH GMBH**
**Postfach 50**
**D-7000 Stuttgart 1(DE)**

(72) Erfinder: **Neukirchner, Ernst-Peter, Dipl.-Ing.**
**Sandkamp 16**
**D-3200 Hildesheim(DE)**
Erfinder: **Schlögl, Dietmar, Dipl.-Ing.**
**Lange Halbe 19**
**D-3226 Sibbesse(DE)**

(54) **Verfahren und Vorrichtung zur Kursbestimmung eines Landfahrzeugs.**

(57) Zur autarken Kursbestimmung eines Landfahrzeugs kann ein Fahrdaten auswertender Sensor mit einem Erdmagnetfelddaten auswertenden Sensor kombiniert werden. Auf diese Weise lassen sich die Vorteile einer Kurzstreckenstabilität des Fahrdaten auswertenden Sensors mit einer Langstreckenstabilität des Erdmagnetfelddaten auswertenden Sensors verbinden. Besonders günstige Ergebnisse werden erzielt, wenn die Ausgangssignale des Fahrdaten auswertenden Sensors über einen Hochpaß und die Ausgangssignale des Erdmagnetfelddaten auswertenden Sensors über einen Tiefpaß geführt und beide Signale anschließend addiert werden.

Die Erfindung ist zur Ergänzung eines stadtplangestützten elektronischen Ortungs-und Navigationssystem für Autofahrer anwendbar.

Fig.1

EP 0 289 803 A2

## Verfahren und Vorrichtung zur Kursbestimmung eines Landfahrzeugs

Die Erfindung betrifft ein Verfahren zur Kursbestimmung eines Landfahrzeugs nach dem Oberbegriff des Anspruchs 1.

Unter der Bezeichnung EVA (Elektronischer Verkehrslotse für Autofahrer) wird ein autarkes Ortungs-und Navigationssystem für Landfahrzeuge entwickelt. Die für die Standortbestimmung notwendigen Daten werden durch Koppelortung nach dem planimetrischen Verfahren gewonnen, d.h., der aktuelle Standort wird unter Berücksichtigung von Fahrdaten aus dem vorherigen Standort bestimmt. Um im Zuge einer längeren Wegstrecke eine Akkumulation von Fehlern zu vermeiden, wird der aus den Fahrdaten berechnete Standort von Zeit zu Zeit durch stadtplangestütze Daten korrigiert.

Bei Fahrmanövern, die eine Stadtplanstützung nicht zulassen, z.B. Überlandfahrten, reicht die Koppelortung nach dem planimetrischen Verfahren für eine genaue Standortbestimmung bei längeren Fahrstrecken nicht aus. Die Ursache hierfür liegt z.B. bei der Fahrdatenerfassung mittels Radsensoren in der Reifendynamik begründet. Hierunter versteht man unter anderem Änderungen des Reifendurchmessers aufgrund unterschiedlichen Luftdrucks, unterschiedlicher Belastung oder Kurvenschräglage. Während die so gewonnenen Fahrdaten für kleine Wegstrecken sehr genau sind, kann es bei längeren Wegstrecken zu einem völligen Verlust des absoluten Kursbezugs kommen.

Eine größere Langstreckenstabilität bietet demgegenüber das Erdmagnetfeld, so daß Erdmagnetfelddaten statt Fahrdaten zur Kursbestimmung verwendet werden könnten. Es hat sich jedoch gezeigt, daß das Erdmagnetfeld Feldverzerrungen unterworfen ist, die durch große Eisenmassen, wie z.B. andere Autos, Brücken, Eisen-oder Straßenbahnschienen, oder durch elektrische Ströme, z.B. in Erd-oder Überlandleitungen hervorgerufen werden können. Die Feldverzerrungen können bei kleineren Wegstrecken die Kursbestimmung stark verfälschen.

Durch die DE-OS 29 27 325 ist es bekannt, sowohl Fahrdaten als auch Erdmagnetfelddaten auszuwerten und diese einem Kursrechner zuzuführen. Dabei erhält der Kursrechner die Summe aus den vorherigen Kursdaten, der Differenz der Fahrdaten sowie aus einem Korrektursignal. Das Korrektursignal wird aus aufbereiteten Erdmagnetfelddaten gewonnen und zwar auf der Basis der Differenz zwischen dem aktuellen Erdmagnetfelddaten und den vorherigen Kursdaten ermittelt. Dieser Wert wird dann mit zwei Korrekturfaktoren multipliziert. Der eine Korrekturfaktor bestimmt die Nachführungsgeschwindigkeit unter Berücksichtigung der Zykluszeit des Kursrechners. Der andere Korrekturfaktor ist von der Fahrgeschwindigkeit des Fahrzeugs abhängig, also sowohl vom Weg als auch von der Zeit. Bei Störungen des Erdmagnetfelds wird der Kurs im wesentlichen durch die Fahrdaten bestimmt.

Ausgehend von diesem Stand der Technik liegt der Erfindung die Aufgabe zugrunde, ein Verfahren zur Kursbestimmung eines Landfahrzeugs hinsichtlich der Fahrdaten-und Erdmagnetfelddatenverarbeitung zu vereinfachen und damit die Rechenzeit des Kursrechners zu verringern sowie die Kursgenauigkeit zu erhöhen.

Diese Aufgabe wird bei einem Verfahren zur Kursbestimmung nach dem Oberbegriff des Anspruchs 1 durch die im kennzeichnenden Teil angegebenen Merkmale gelöst.

Die erfindungsgemäße Lösung gestattet es, die Fahrdaten und die Erdmagnetfelddaten dem Kursrechner nach einfachen, zeitextensiven Rechenoperationen zuzuführen. Die verwendeten Rechenoperationen sind die Differentiation und die Integration. Diese Art von Rechenoperationen erfolgt unter konsequenter Berücksichtigung der Langstrecken-und Kursstreckencharakteristik der beiden Sensoren. Sie dient dazu, den möglichen Fehleranteil der Sensorausgangssignale zu unterdrücken und den fehlerfreien Nutzanteil unverändert passieren zu lassen.

Zweckmäßig wird die Differentiation und die Integration ausschließlich nach der bzw. über die zurück gelegte Wegstrecke, nicht aber die Zeit vorgenommen, da diese für Abweichungen primär nicht relevant ist. Eine entsprechend einer Fortbildung vorgeschlagene Ausführung sieht vor, den Differenzierer als Hochpaß und den Integrierer als Tiefpaß auszubilden. Auf diese Weise wird ermöglicht, die Grenze der Einflüsse kurzstreckenstabiler und langstreckenstabiler Daten durch Festlegung der Eckfrequenzen sehr genau zu berücksichtigen. Insbesondere lassen sich so genaue Voraussagen über die verbleibende Fehlertoleranz machen.

Die Erfindung betrifft ferner eine Vorrichtung zur Kursbestimmung eines Landfahrzeugs nach dem Oberbegriff des Anspruchs 10.

Diesbezüglich liegt ihr die Aufgabe zugrunde, eine Vorrichtung zur Kursbestimmung zu schaffen, welche hinsichtlich der Fahrdaten-und Erdmagnetfelddatenverarbeitung einfacher aufgebaut ist, so daß damit die Größe und Speicherkapazität des Kursrechners verringert wird, die Rechenzeit verkürzt wird und die Kursgenauigkeit erhöht wird.

Diese Aufgabe wird bei einer Vorrichtung zur Kursbestimmung eines Landfahrzeugs nach dem Oberbegriff des Anspruchs 10 durch die im kennzeichnenden Teil angegebenen Merkmal gelöst.

Die erfindungsgemäße Vorrichtung bedient sich eines kurzstreckenstabilen Sensors und eines langstreckenstabilen Sensors. Die Kombination beider Sensoren besitzt eine Charakteristik, die sowohl den Forderungen nach einer Kurzstreckenstabilität als auch nach einer Langstreckenstabilität gerecht wird. Um ein Durchschlagen von Fehlern oder Störungen zu vermeiden, ist dem Fahrdaten auswertenden Sensor ein Differenzierer und dem Erdmagnetfelddaten auswertenden Sensor ein Integrierer nachgeschaltet. Der Differenzierer und der Integrierer können sowohl körperlich als auch durch ein Rechenprogramm verwirklicht sein. Die Vorrichtung ermöglicht eine sehr gradlinige Verarbeitung der von den Sensoren ermittelten Daten, wodurch nur wenig Speicherkapazität des Kursrechners benötigt wird. Die Vorrichtung kann deshalb unkompliziert aufgebaut werden, besitzt eine hohe Rechengeschwindigkeit und kurze Zykluszeit und kann aufgrund der optimalen Anpaßmöglichkeit des Differenzierers bzw. Integrierers an den Fahrdatensensor bzw. an den Erdmagnetfeldsensor eine hohe Genauigkeit erlangen.

Die Differentiation und die Integration erfolgen beide ausschließlich nach der bzw. über die Wegstrecke. Da diese Größe, nicht aber die Zeit primär für eine Kursänderung maßgeblich ist, bildet diese Maßnahme den direkten Weg zur Erzielung eines Ergebnisses. Da nur eine Größe berücksichtigt werden muß, ist der schaltungstechnische Aufwand bzw. der Programmaufwand gerade so groß, wie unbedingt notwendig.

Bei einer Weiterbildung ist der Differenzierer als Hochpaß und der Integrierer als Tiefpaß ausgebildet, wodurch die Grenze der Einflüsse von Fehlern bei kurzstreckenstabilen Daten sowie Störungen bei langstreckenstabilen Daten sehr genau und übersichtlich festgelegt werden kann. Es findet also keine unerwünschte Beeinflussung als Folge der Veränderung der einen oder anderen Grenzfrequenz bei dem jeweils anderen Sensor statt.

Weiterbildungen und vorteilhafte Ausführungsformen der Erfindung ergeben sich aus den weiteren Ansprüchen, der Beschreibung und der Zeichnung, die ein Ausführungsbeispiel der Erfindung veranschaulicht.

Es zeigen:

Fig. 1 als Blockschaltbild die gemeinsame Anordnung von Fahrdatensensoren und Erdmagnetfeldsensoren zur Speisung eines Kursrechners,

Fig. 2a im Original einen Fahrweg bei einer rechtwinklig abknickenden Straße,

Fig. 2b den Fahrweg, wie er von dem fahrdatenverarbeitenden Sensor erfaßt wird,

Fig. 2c den Fahrweg, wie er von dem die Erdmagnetfelddaten verarbeitenden Sensor erfaßt wird,

Fig. 3a den Kurs im Original als Winkel $\phi$ über der Wegstrecke s aufgetragen,

Fig. 3b eine entsprechende Darstellung für den Kurs aufgrund der Fahrdaten,

Fig. 3c eine entsprechende Darstellung für den Kurs aufgrund der Erdmagnetfelddaten,

Fig. 4 eine komplizierte Wegstrecke,

Fig. 5 den Kursverlauf bei Durchfahren der Wegstrecke als Winkel $\phi$ über der Wegstrecke s,

Fig. 6 den anhand von Fahrdaten ermittelten Kursverlauf,

Fig. 7 den anhand von Erdmagnetfelddaten ermittelten Kursverlauf,

Fig. 8 den Kursverlauf gemäß Fig. 5 nach Passieren eines Hochpaßfilters,

Fig. 9 den Kursverlauf nach Fig. 7 nach Passieren eines Tiefpaßfilters und

Fig. 10 den Kursverlauf nach Verknüpfung der Hochpaß-und Tiefpaß-bearbeiteten Fahrbzw. Erdmagnetfelddaten.

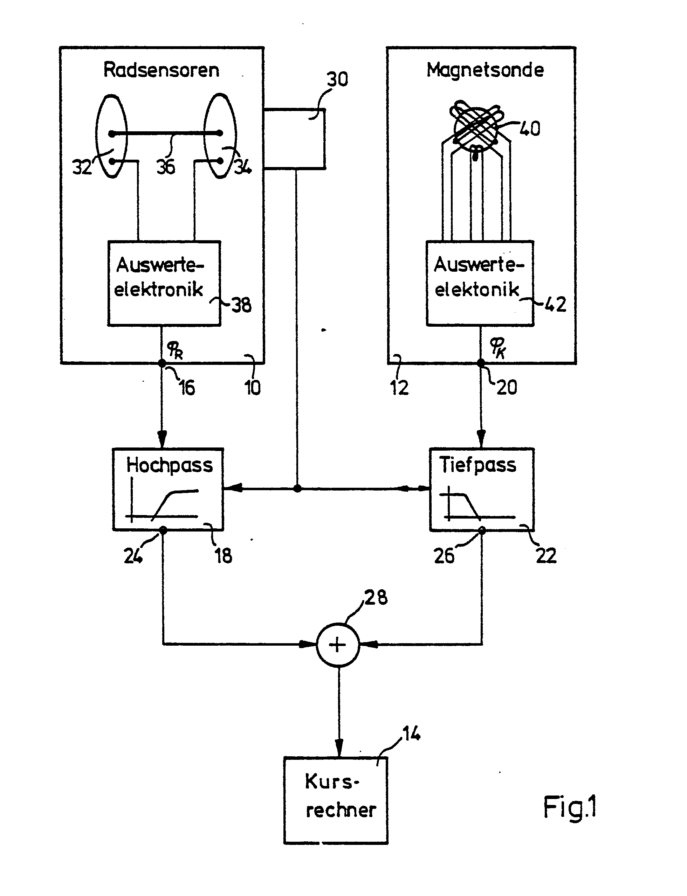

Die in Fig. 1 dargestellte erfindungsgemäße Vorrichtung umfaßt einen ersten, Fahrdaten auswertenden Sensor 10, dem ein Hochpaß 18 nachgeschaltet ist, einen zweiten Erdmagnetfelddaten auswertenden Sensor 12, dem ein Tiefpaß 22 nachgeschaltet ist, einen sich an den Hochpaß 18 und Tiefpaß 22 anschließenden Addierer 28 sowie einen Kursrechner 14. Außerdem ist noch ein Wegstreckensensor 30 vorhanden, der mit den Hochpaß 18 und dem Tiefpaß 22 verbunden ist.

Bei dem Fahrdaten auswertenden Sensor 10 und dem Erdmagnetfelddaten auswertenden Sensor 12 handelt es sich um an sich bekannte und von der Industrie lieferbare Baugruppen. Die diesbezügliche Erläuterung kann sich daher auf den prinzipiellen Aufbau beschränken.

Der Fahrdaten auswertende Sensor 10 umfaßt Radsensoren 32 und 34, die auf derselben Achse 36 angeordnet sind. Die Radsensoren 32, 34 nehmen mittels Impulsgeber die Drehbewegungen der Räder auf und leiten die Impulse zu einer Auswerteelektronik 38, die daraus einen Kurswinkel $\phi_R$ berechnet. Die Eigenschaften der Kurserfassung mittels Radsensoren 32, 34 lassen sich durch die folgende Gleichung charakterisieren:

$$d \phi(s) / ds = dr(s) / ds - f(s)$$

$\phi$ absoluter Kurswinkel

s Wegstrecke

r mit Radsensoren gemessener Kurswinkel

f Kursdrift

Die Kursdrift ist keine Konstante, sondern von verschiedenen äußeren Einflüssen abhängig. Sie läßt sich jedoch soweit einschränken, daß gilt, wenn T nicht zu groß gewählt wird:

$$\int_{s}^{s+T} f(t)\ dt \leq 5\ \mathrm{Grd}$$

T ist die maximale Weglänge, auf der der Einfluß der Kursdrift noch vernachlässigt werden kann.

Der Magnetfelddaten auswertende Sensor 12 umfaßt eine Zwei-Achsen-Magnetsonde 40 und eine Auswerteelektronik 42. Die Auswerteelektronik 42 berechnet aus den beiden aufgenommenen Komponenten des Erdmagnetfeldes einen Kurswinkel $\phi_K$. Die Eigenschaften der Winkelerfassung mit einer Magnetfeldsonde lassen sich durch folgende Gleichung charakterisieren:

$\phi(s) = k(s) - g(s)$
k = von der Magnetsonde gelieferter Kurswinkel
g = durch äußere Einflüsse verursachter Störwinkel

Dabei gilt für den Störwinkel, wenn U genügend groß gewählt wird:

$$1/U \int_{s}^{s+U} g(t)\ dt \leq 5\ \mathrm{Grd}$$

U ist dabei die maximale Ausdehnung üblicher magnetischer Störungen.

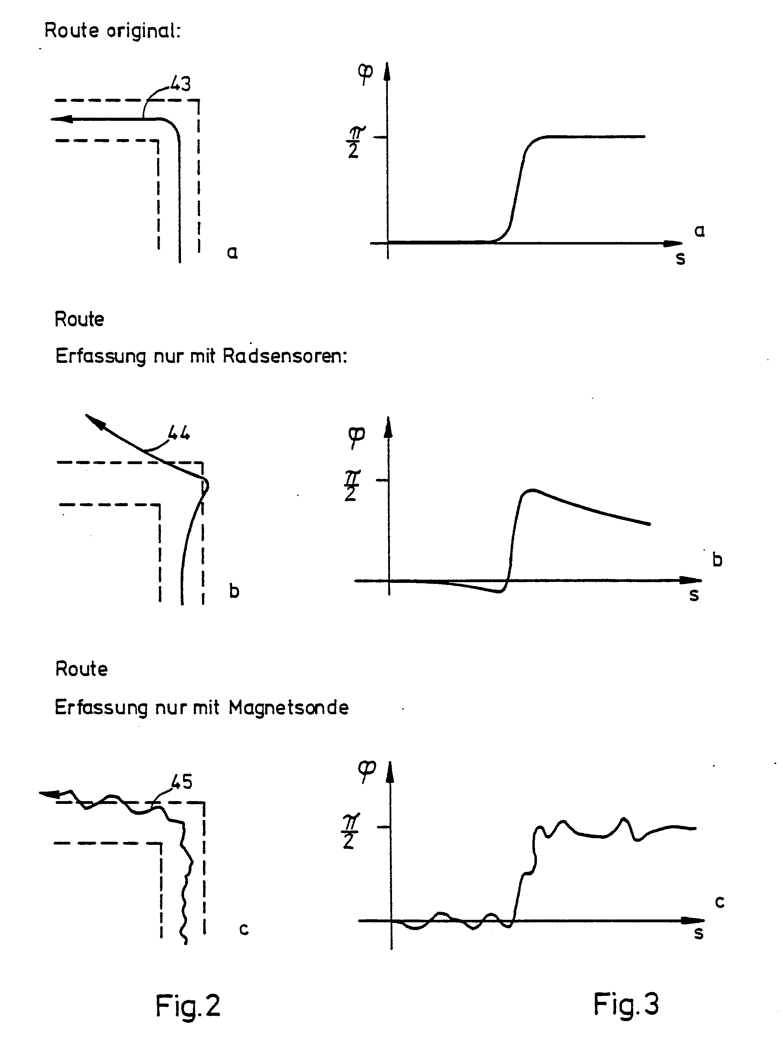

Zur Erläuterung einer Kursbestimmung durch ausschließlich den Fahrdaten auswertenden Sensor 10 oder den Erdmagnetfelddaten auswertenden Sensor 12 wird auf die Figuren 2a, b, c und 3a, b, c Bezug genommen. Dargestellt ist in Fig. 2 ein Straßenabschnitt mit rechtwinklig abknickender Kurve. Die Originalroute ist in Fig. 2a durch die ausgezogene Linie 43 dargestellt. Ihr entspricht ein Kurswinkel $\phi$ , wie er in Fig. 3a über der Wegstrecke s aufgetragen ist.

Fig. 2b zeigt die Route 44, welche sich aus dem Kurswinkel des Fahrdaten auswertenden Sensors 10 ergeben würde, wenn unterstellt wird, daß eine konstante Kursdrift vorliegt. Zur Verdeutlichung ist die Darstellung übertrieben gezeichnet. In Fig. 3b ist der Verlauf des Kurswinkels $\phi$ selbst dargestellt.

Fig. 2c zeigt die Route 45, welche sich aus dem Kurswinkel des Erdmagnetfelddaten auswertenden Sensors 12 ergeben würde, wenn diesmal unterstellt wird, daß wechselnde magnetische Störungen dazu führen, daß sich dem Kurswinkel ein Störwinkel überlagert. In Fig. 3c ist der Verlauf des Kurswinkels selbst dargestellt.

Ein Vergleich zwischen den Darstellungen in Fig. 2b und 2c bzw. Fig. 3b und Fig. 3c zeigt auch graphisch folgende Eingenschaften der Sensoren: der Kurswinkel $\phi_R$ des Fahrdaten auswertenden Sensors 10 folgt über kleine Wegstrecken dem

tatsächlichen Kurswinkel $\phi$ sehr genau, bei längerer Wegstrecke weicht er dagegen immer mehr ab. Der Kurswinkel $\phi_K$ des Erdmagnetfelddaten auswertenden Sensors 12 ist über eine längere Wegstrecke im Mittel genau, kann bei kurzen Wegstrecken aber Störungen unterliegen. Werden nun Grenzwerte für T, also die maximale Weglänge, auf der der Einfluß der Kursdrift noch vernachlässigt werden kann, und für U, also die maximale Ausdehnung üblicher magnetischer Störungen festgelegt, bei der eine Abweichung des vorgegebenen Kurswinkels unter z.B. 5° liegt, so ergibt sich, daß die nutzbaren Bereiche des Fahrdaten erfassenden Sensors 10 und des Erdmagnetfelddaten erfassenden Sensors 12 einander überlappen. Dieser Umstand erlaubt es, bei Kombination der beiden Sensoren 10, 12 eine Ausblendung potentieller Fehlerbereiche vorzunehmen. Dabei kommt es in keinem Wegstreckenbereich zu einer erhöhten Kursfehlerwahrscheinlichkeit.

Bezugnehmend auf Fig. 1 erfolgt die Ausblendung von potentiellen Fehlerbereichen bei dem Fahrdaten erfassenden Sensor 10 durch den an den Ausgang 16 ange schlossenen Hochpaß 18 und bei dem Erdmagnetfelddaten auswertenden Sensor 12 durch den an den Ausgang 20 angeschlossenen Tiefpaß 22. Der Hochpaß 18 und der Tiefpaß 22 sind für eine Frequenzcharakteristik ausgeführt, bei der "Freuqenz" als Ereignisse pro Wegelement, statt, wie sonst üblich, als Ereignisse pro Zeitelement definiert ist.

Zur Erfassung der Wegstrecken-Bezugsgröße dient ein Wegstreckensensor 30, der mit dem Hochpaß 18 und mit dem Tiefpaß 22 verbunden ist. Die Eckfrequenz 1/S des Hochpasses 18 und des Tiefpasses 22 sind gleich, damit bei Kombination der Ausgangssignale ein linearer Frequenzgang erzielt wird. Die Festlegung der Eckfrequenz 1/S erfolgt unter Berücksichtigung der oben erläuterten Wegstrecken T und U, wobei folgende Beziehung gelten soll:

$U < S < T$

Vorzugsweise wird von beiden Sensoren 10, 12 ein entsprechend gleich großer potentieller Fehlerbereich ausgeblendet. Die Reziproke S der Eckfrequenz 1/S wird also etwa zwischen T und U gelegt. Ein Wert von 200 Meter, somit eine Eckfrequenz von 1 : 200 Meter hat sich dabei als besonders praxixnah erwiesen.

Die Ausgangssignale des Fahrdaten auswertenden Sensors 10 und des Erdmagnetfelddaten auswertenden Sensors 12 werden vom Ausgang 24 des Hochpasses 18 bzw. vom Ausgang 26 des Tiefpasses 22 zum Addierer 28 und von dort zum Kursrechner 14 geführt. Durch Verknüpfung im Addierer 28 wird ein Signal erhalten, dessen Kurswinkel über die gesamte Wegstreckenbandbreite einen kleineren Fehler aufweist als der maximale Fehler des Fahrdaten erfassenden Sensors 10 nach der Wegstrecke T oder des Erdmagnetfelddaten erfassenden Sensors 12 innerhalb der Wegstrecke U. Vorzugsweise werden die Ausgangssignale des Sensors 10 und des Sensors 12 gleich gewichtet. Für den Fall, daß aufgrund örtlicher Gegebenheiten der Einfluß des einen oder anderen Sensors 10; 12 vermindert oder erhöht werden soll, können jedoch lineare oder nichtlineare Übertragungsglieder dem Hochpaß 18 oder dem Tiefpaß 22 nachgeschaltet werden.

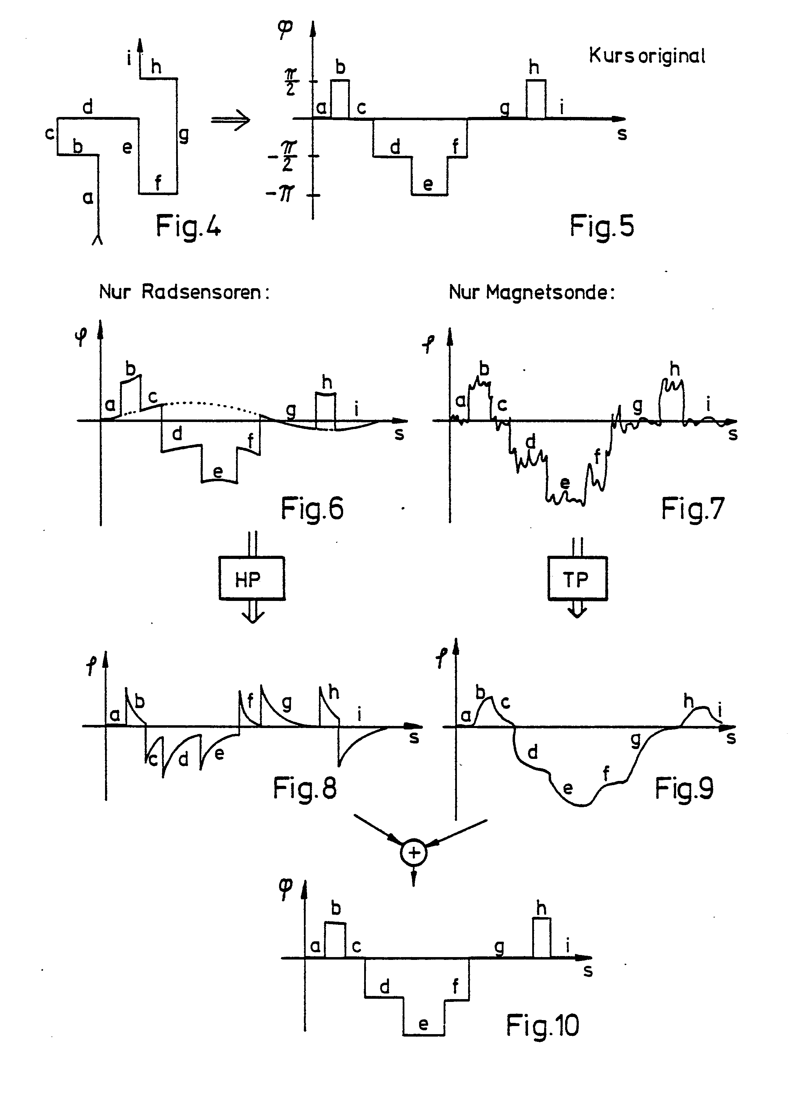

Die Wirkungsweise der erfindungsgemäßen Vorrichtung zur Kursbestimmung ist in den Figuren 4 - 10 veranschaulicht. Fig. 4 zeigt dabei eine angenommene Route, die aus mehreren rechtwinklig abknickenden Wegelementen zusammengesetzt ist. Der Kurswinkel vor und nach Durchfahren der Route ist gleich. Die einzelnen Wegelemente sind zur besseren Wiedererkennung in den folgenden Darstellungen mit den Kleinbuchstaben a - i bezeichnet.

Fig. 5 zeigt den Kurswinkel $\phi$ über der Wegstrecke s aufgetragen, wie er sich im Idealfall, also bei fehlerfrei arbeitenden Sensoren 10, 12 ergeben würde.

Fig. 6 zeigt den Kurswinkel $\phi_R$ am Ausgang 16 des Fahrdaten erfassenden Sensors 10. Der gemessene Kurswinkel $\phi_R$ driftet zur Nullinie, wie durch die gestrichelt weitergeführte Linie, die den Driftwinkel angibt, veranschaulicht ist. In der Darstellung ist ein sinusförmiger Verlauf des Driftwinkels willkürlich angenommen. Es kann, wie in der Praxix häufiger, auch ein von der Nullinie divergierender Driftwinkel vorkommen, der nach einer gewissen Wegstrecke keinerlei Rückschlüsse auf den Bezugskurs erlaubt.

Fig. 7 zeigt den entsprechenden Kurswinkel $\phi_K$ am Ausgang 20 des Erdmagnetfelddaten erfassenden Sensors 12. Der gemessene Kurswinkel $\phi_K$ ist von Störungen überlagert, die über kurze Wegstrecken auftreten. Sein mittlerer Wert folgt jedoch im wesentlichen dem Kurswinkel nach Fig. 5.

Die Figuren 8 und 9 sind unterhalb der Figuren 6 und 7 angeordnet, um in Analogie zum Aufbau des Blockschaltbildes gemäß Fig. 1 den Signalverlauf am Ausgang 24 des Hochpasses 18 (Fig. 8) und dem Ausgang 26 des Tiefpasses 22 (Fig. 9) zu veranschaulichen.

In Fig. 8 folgt der Kurswinkel jeder auf einer kurzen Wegstrecke vorgenommenen Änderung der Route. Änderungen während einer längeren Wegstrecke, die auch durch Drift entstanden sein können, werden dabei ausgeblendet. Das Signal folgt hier einer e-Funktion gegen die Nullinie.

In Fig. 9 führen Kurswinkeländerungen innerhalb einer kurzen Wegstrecke kaum zu einer Änderung des Signals. Erst nach längerer Wegstrecke paßt sich das Signal dem Kurswinkel an. Kurze Störungen werden so unterdrückt.

Fig. 10 zeigt den Signalverlauf nach der Addition der an dem Ausgang 24 des Hochpasses 18 und an dem Ausgang 26 des Tiefpasses 22 anstehenden Signale. Sind die Eckfrequenzen des Hochpasses 18 und des Tiefpasses 22 gleich, so führt die Addition, wie auch graphisch erkennbar, wieder zu einem dem Kurswinkel $\phi$ folgenden Signal. Da die Kursdrift des die Fahrdaten auswertenden Sensors 10 und die Störungen des die Erdmagnetfelddaten auswertenden Sensors 12 ausgeblendet sind, entspricht das zusammengesetzte Signal wieder dem in Fig. 5 dargestellten idealen Verlauf des Kurswinkels $\phi$ überder Wegstrecke s.

Im Zusammenhang mit Fig. 1 sei abschließend noch daraufhingewiesen, daß es in der Praxis nicht unbedingt erforderlich ist, die Differentiation mit Hilfe eines konkret in Form einer Schaltung ausgebildeten Hochpasses 18 durchzuführen; von dem Fahrdaten auswertenden Sensor 10 können nämlich bereits differenzierte Werte abgegeben werden, weil die Wegmessung jeweils längs kleiner Teilstrecken (Differentiale) erfolgen kann. Damit ist also eine Differentiation bereits durchgeführt. Der in Fig. 1 gezeigte Differenzierer 18 (Hochpaß), der auch in Fig. 6 dargestellt ist, ist daher nur zur besseren Verdeutlichung der Erfindung gezeichnet.

## Ansprüche

1. Verfahren zur Kursbestimmung eines Landfahrzeugs mit einem ersten, Fahrdaten auswertenden Sensor und einem zweiten, Ermagnetfelddaten auswertenden Sensor sowie einem Kursrechner, dem Ausgangssignale von beiden Sensoren zugeführt werden, dadurch gekennzeichnet, daß zuerst die Ausgangssignale des Fahrdaten auswertenden Sensors differenziert und die Ausgangssignale des Erdmagnetfelddaten auswertenden Sensors integriert werden und anschließend die differenzierten mit den integrierten Ausganssignalen verknüpft werden.

2. Verfahren nach Anspruch 1, dadurch gekennzeichnet, daß die Differentiation und die Integration ausschließlich nach der bzw. über die zurückgelegte Wegstrecke vorgenommen wird.

3. Verfahren nach Anspruch 1 oder 2, dadurch gekennzeichnet, daß die Differentiation durch einen Hochpaß und die Integration durch einen Tiefpaß vorgenommen wird.

4. Verfahren nach Anspruch 3, dadurch gekennzeichnet, daß die Differentiation im Hochpaß und die Integration im Tiefpaß bei übereinstimmenden Eckfrequenzen vorgenommen werden.

5. Verfahren nach Anspruch 4, dadurch gekennzeichnet, daß die Eckfrequenz so bemessen wird, daß ihr Reziprokwert (S) kleiner als die maximale Wegstrecke (T) ist, bei der der Einfluß der Kursdrift unterhalb eines vorgegebenen Kurswinkels von vorzugsweise 5° liegt und kleiner als die Wegstrecke (U) ist, über die sich übliche magnetische Störungen unterhalb eines vorgegebenen Kurswinkels von vorzugsweise 5° auswirken.

6. Verfahren nach Anspruch 5, dadurch gekennzeichnet, daß die Differentiation im Hochpaß und die Integration im Tiefpaß bei einer Eckfrequenz von 1/200 Meter vorgenommen werden.

7. Verfahren nach einem der Ansprüche 1 - 6, dadurch gekennzeichnet, daß die differenzierten und integrierten Ausgangssignale addiert oder subtrahiert werden.

8. Verfahren nach einem der Ansprüche 1 - 7, dadurch gekennzeichnet, daß die differenzierten und integrierten Ausgangssignale gleich gewichtet werden.

9. Verfahren nach einem der Ansprüche 1 - 8, dadurch gekennzeichnet, daß die Fahrdaten aus dem Absolutwert sowie der Differenz der zurückgelegten Wegstrecken zweier auf derselben Achse angeordneter Räder gewonnen werden.

10. Vorrichtung zur Kursbestimmung eines Landfahrzeugs, bestehend aus einem ersten, Fahrdaten auswertenden Sensor (10) und einem zweiten, Erdmagnetfelddaten auswertenden Sensor (12) sowie einem Kursrechner (14), dem Ausgangssignale ($\phi_R$, $\phi_K$) von bei den Sensoren (10, 12) zugeführt sind, dadurch gekennzeichnet, daß dem Ausgang (16) des Fahrdaten auswertenden Sensors (10) ein Differenzierer (18) und dem Ausgang (20) des Erdmagnetfelddaten auswertenden Sensors (14) ein Integrierer (22) nachgeschaltet ist und daß die Ausgänge (24, 26) des Differenzierers (18) bzw. des Integrierers (22) zu einem gemeinsamen Verknüpfungsglied (28) geführt sind.

11. Vorrichtung nach Anspruch 10, dadurch gekennzeichnet, daß der Differenzierer (18) und der Integrierer (22) mit einem Fahrstreckensensor (30) verbunden sind.

12. Vorrichtung nach Anspruch 10 oder 11, dadurch gekennzeichnet, daß der Differenzierer als Hochpaß (18) und der Integrierer als Tiefpaß (22) ausgebildet sind.

13. Vorrichtung nach Anspruch 12, dadurch gekennzeichnet, daß der Hochpaß (18) und der Tiefpaß (22) die gleiche Eckfrequenz besitzen.

14. Vorrichtung nach Anspruch 13, dadurch gekenn zeichnet, daß die Eckfrequenzen so bemessen sind, daß ihr Reziprokwert (S) kleiner als die maximale Wegstrecke (T) ist, bei der der Einfluß der Kursdrift unterhalb eines vorgegebenen Kurswinkels von vorzugsweise 5° liegt, und kleiner als die Wegstrecke (U) ist, über die sich übliche magnetische Störungen unterhalb eines vorgegebenen Kurswinkels von vorzugsweise 5° auswirken.

15. Vorrichtung nach Anspruch 14, dadurch gekennzeichnet, daß die Eckfrequenz bei 1/200 Meter liegt.

16. Vorrichtung nach einem der Ansprüche 10 - 15, dadurch gekennzeichnet, daß das Verknüpfungsglied als Addierer (28) oder Subtrahierer ausgebildet ist.

17. Vorrichtung nach einem der Ansprüche 10 - 16, dadurch gekennzeichnet, daß dem Differenzierer und dem Integrierer lineare oder nicht lineare Übertragungsglieder nachgeschaltet sind.

18. Vorrichtung nach einem der Ansprüche 10 - 17, dadurch gekennzeichnet, daß der die Fahrdaten auswertende Sensor (10) aus einem Paar Radsensoren (32, 34) besteht, die auf derselben Achse (36) angeordnet sind, sowie einer gemeinsamen Auswerteelektronik (38) für den Absolutwert sowie die Differenz der zurückgelegten Wegstrecke aus dem Drehwinkel der Räder.

Fig.1

Route original:

Route

Erfassung nur mit Radsensoren:

Route

Erfassung nur mit Magnetsonde

Fig.2

Fig.3

Fig.4

Fig.5

Kurs original

Nur Radsensoren:

Fig.6

Nur Magnetsonde:

Fig.7

HP

TP

Fig.8

Fig.9

Fig.10